# EUROPEAN PATENT SPECIFICATION

(11) **EP 1 548 542 B1**
(45) Date of publication and mention of the grant of the patent: **02.09.2015**
(21) Application number: 05102296.0
(22) Date of filing: 23.12.1998
(51) Int. Cl.: G06F 1/00

(54) **Secure Printing**
Sicheres Drucken
Impression sécurisée

(30) Priority: 09.01.1998 EP 98300144
(43) Date of publication of application: 29.06.2005
(62) Divisional of application: 98310692.3
(73) Proprietor: Hewlett-Packard Development Company, L.P., Houston, TX 77070 (US)
(72) Inventor: Gupta, Dipankar, CA 94086, Sunnyvale (US); Van Wilder, Bruno Edgard, BS8 2BZ, Bristol (GB); Chan, David, BS9 4SR, Bristol (GB)
(74) Representative: Lawman, Matthew John Mitchell

(56) References cited:
- EP-A- 0 580 350
- EP-A- 0 665 486
- EP-A- 0 691 619
- GB-A- 2 267 986

## Description

### Technical Field

The present invention relates to hardcopy production of documents and particularly, but not exclusively, to document printing.

### Background Art

It is well known to generate or design a document using a computer-based text editing or graphics package, for example Microsoft™ Word or Microsoft™ PowerPoint respectively. Once generated, a document can be printed. Typically the package or a print driver formats the document into a printer file that can be received and interpreted by a printer. Example printer file formats are PCL or PostScript. Printer files can be sent directly by the package to a printer to be printed, or can be stored for printing at a later time.

This principle typically applies to all types of printer, for example laser printers, ink jet printers, impact printers and thermal printers, and in general to other hardcopy devices such as plotters or facsimile machines. Conveniently, herein, the term "printer" covers all such different types of printer, or other hardcopy or document rendering apparatus and devices.

Also, for the sake of convenience of description herein, the term "document" will hereafter be used to denote a document in any state, including (but not limited to) when viewed on a computer display, when formatted as a printer file ready for printing, and when in hardcopy form. The state the document is in at any point in the description depends on the context. Also, a "document" may include text, graphics or mixed representations.

The advent of distributed computer systems made it possible for a single 'network' printer to be used by multiple users. Typically, network printers are attached to computing platforms operating as print servers within distributed systems. Alternatively, some printers, given appropriate interfaces, can be arranged to connect directly to the network of a distributed system.

Network printers, whether connected directly, or via a print server, to a network, can provide a substantial cost advantage, since each user need not have his own printer connected to, or located near to, his own computer system.

The ability to access network printers, and other devices, from a local computer, is readily supported by operating systems such as Unix, or Microsoft's™ Windows™ NT, which are designed to be configured to manage distributed operations such as remote printing or data management.

One problem with printing documents on remote network printers is that any person near to the printer could remove or read printed documents containing sensitive information, which do not belong to them, before the correct recipients are able to retrieve the documents. One way around this is for users who need to print sensitive documents to arrange for a trusted person to stand by the printer while the document is printing and collect the documents as soon as it has printed. This is, of course, inconvenient.

Another way to increase security is to print sensitive documents only on a local printer. The latter case, however, undermines any cost advantages gained in having a centrally located, network printer, especially if many users need to print sensitive documents.

Another problem associated with remote printing of sensitive documents is that a malicious party could intercept or monitor the transfer of data between the local computer and network printer. For example, anyone with access to a print spooler or print server receiving the document for printing could access the document. This would be highly undesirable and, again, could be overcome by using a local printer attached directly to the originating computer instead.

EP 0691619 describes a technology wherein users carry PDAs (electronic satchels) around and can transfer documents between one another and between themselves and printers simply by passing document tokens, by dragging and dropping icons on the PDAs

### Disclosure of the Invention.

Aspects of the present invention aim to increase the security of remote printing.

The present invention provides a smart card reader apparatus comprising: smart card interface means for interacting with a smart card containing at least an identifier; first communicating means for communicating with a local printing apparatus; and second communicating means for communicating with a remote document store over a network, said document store containing documents and, for each said document, an associated identifier, the apparatus being arranged to: interact with a supplied smart card and obtain an identifier therefrom; generate a request for a document using the identifier and communicate the request to the document store in order to retrieve a document on the basis of the identifier; and receive a communicated document and communicate the document to an associated printing apparatus, for printing the document.

According to an embodiment of the invention, documents in the document store are stored in encrypted form and have an associated stored encrypted key and the said smart card has means for decrypting the encrypted key, the apparatus being further arranged to: retrieve an encrypted document and its respective encrypted key on the basis of the identifier; and interact with the smart card to decrypt the key and, using the decrypted key, decrypt the document.

The smart card reader apparatus may be arranged to receive the encrypted key in a first communication from the document store and receive the encrypted document in a subsequent communication from the document store.

The smart card reader apparatus may further comprise input means for receiving a user-inputted identifier and means for transmitting the identifier to the smart card, whereby the smart card can authenticate the user as a legitimate user thereof.

### Brief Description of the Drawings

An embodiment of the present invention will now be described, by way of example only, with reference to the accompanying drawing, of which:
Figure 1 is a diagram which illustrates a distributed computing environment which supports secure printing in accordance with an embodiment of the present invention;
Figure 2 is a block diagram of an architecture for a printer according to the present embodiment;
Figure 3 is a flow diagram which illustrates the steps involved in a user submitting a document for secure printing; and
Figures 4 is a flow diagram that illustrates the steps involved in a secure printer retrieving and printing a print job.

### Best Mode For Carrying Out the Invention, & Industrial Applicability

The following description refers specifically to a printer as the hardcopy device. However, it is emphasised that the same principles apply to other hardcopy apparatus such as facsimile machines.

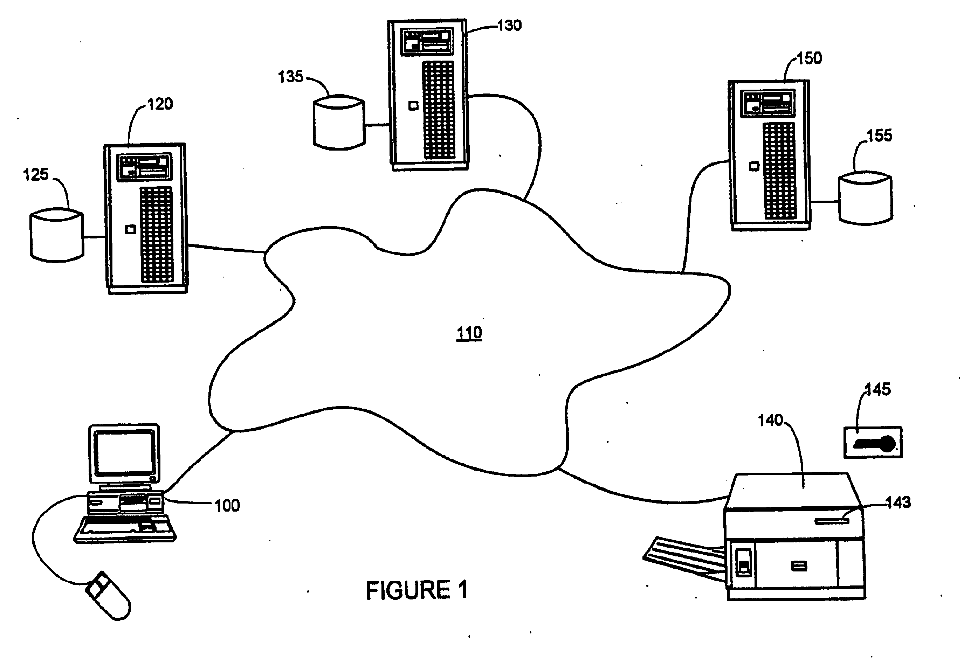

In Figure 1, a local computer 100, for example an Intel Pentium based computer operating under Windows NT 4.0, includes the standard components of a keyboard, a display and a mouse (none of which are shown). The local computer 100 is attached to a network 110, for example a network supporting the TCP/IP protocol. The local computer 100 provides a secure printer process, which is a software routine that can be initiated by a user when secure printing is required. The process, and all other processes in this embodiment, can be written in any general purpose programming language, such as Visual C++.

Also connected to the network 110 are a directory server 120, a document store 130, a secure printer 140 and billing engine 150.

The directory server 120 is a process running on a computer, which has access to a database 125 of user-specific information, known as user-profiles. The directory server 120 is arranged to receive from requesting processes requests for specific information for particular users, and returns the specific information to the requesting process, whenever possible. The computer running the directory server 120 could be a UNIX or Windows NT platform connected to the network 100 via an appropriate interface. The directory server 120 in the present embodiment is a simple database, which receives enquiries and returns relevant data, but it could be based on purpose-built directory services such as Novell's NDS or Microsoft's Active Directory. In accordance with the present embodiment, the directory server 120 is configured to receive a request including a user identity and return at least a public encryption key associated with the identified user. Communications with the directory server 120 may be with a network protocol such as the Lightweight Directory Access Protocol (LDAP).

The document store 130 is a process running on a computer which receives and stores encrypted document files and associated user identities. The document store 130 also receives requests to forward to specified locations encrypted document files having a specified identity. Again, the computer running the directory server 120 could be a Unix or Windows NT platform connected to the network 100 via an appropriate interface.

In practice, the document store 130 can be a modified print spooler or print server process, which has access to a large amount of data storage, for example provided by a disk drive 135. The spooler or server is modified in the respect that it is arranged to recognise encrypted documents and, rather than forwarding them to a specific printer, hold or store the encrypted documents. The spooler or server is also modified to receive requests from printers for specific encrypted documents, search for the specified encrypted documents and transfer the encrypted documents to the requesting printer.

It should be noted that the document store 130 in the present embodiment is an untrusted part of the distributed system, in that the document store 130 is configured to return documents to any requesting printer, or other device using an appropriate protocol. The present embodiment relies on the security of the strong encryption applied to the document to protect the information in the document.

In other embodiments, where security is even more important, it is envisaged that the document store 130 would further incorporate authentication functionality, which would allow the document store to authenticate either the requesting printer or smart card user. Authentication systems using, for example, digital signatures are well known and will not be considered herein in any more detail.

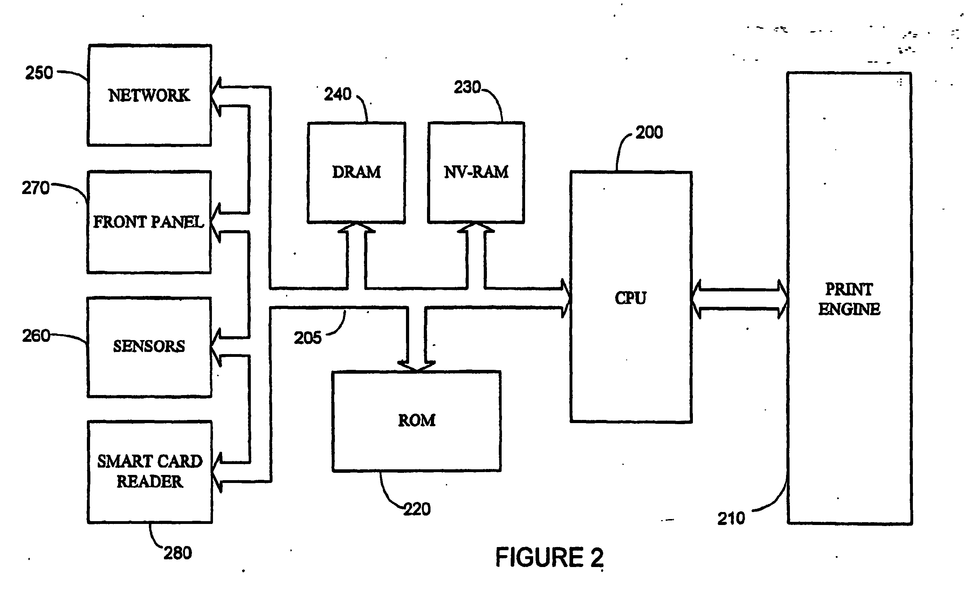

The architecture of the printer 140 according to the present embodiment is illustrated in more detail in Figure 2. Figure 2 illustrates a central processing unit (CPU) 200 that controls a print engine 210, which is a standard part of any printer that enacts printing, and the details thereof are beyond the scope of the present description. A read only memory (ROM) 220 is connected to the CPU 200 by an appropriate system bus 205. The ROM 220 contains the instructions that form the control program for the printer. Also connected to the system bus 205 is non-volatile memory (NV-RAM) 230 and main memory (DRAM) 240. The NV-RAM 230 can be EEPROM or Flash RAM for receiving and storing services downloaded into the printer. The DRAM 240, is used by the printer as buffer memory, for receiving jobs to be printed, and is also used by the CPU 200 in the present embodiment as workspace for decryption and session key storage. All the features of the printer 140 described so far are standard on many generally available printers. The diagram also illustrates the standard printer features of a network interface 250, various sensors 260, for example 'paper out', and a front panel display and keypad 270, all connected to the CPU via the system bus 205. Finally, a smart card reader 280 is provided, also connected to the system bus 205, although it could alternatively be connected via the printer's RS232 port, where one is available. Thus, the only significant, non-standard hardware feature of the printer is the smart card reader 280. The other differences depend on software or firmware processing.

Smart card readers are generally available and conform to accepted standards. The smart card reader used in the present embodiment supports the ISO 7816 standard (levels 1 to 4), and some extra functionality not covered by the ISO standard, which is described herein. Corresponding smart cards are also readily available, and are programmable to operate as described herein.

In practice, the smart card reader can be incorporated into the casing of a standard printer. Thus, in this case, the only significant, noticeable difference about the printer is a slot 143 in the casing into which a smart card 145 can be inserted and retrieved.

Printers which generally have the features illustrated in Figure 2 are a Hewlett-Packard LaserJet 5 or a Hewlett-Packard LaserJet 4000. In either printer, the printer's conventional control program can be modified as described herein, by either replacing the printer's firmware, in ROM 220, or by creating a 'service', which can be downloaded into the printer's flash memory, NV-RAM 230, from the network.

Details on how to modify control programs in Hewlett-Packard and others' printers are beyond the scope of the present description, but are readily available from Hewlett-Packard Company or from the respective other printer manufacturers.

The foregoing description describes a printer with an integral smart card reader, wherein the printer itself is programmed with functionality to retrieve and process encrypted documents. In an alternative embodiment, printing apparatus may be provided comprising a general purpose printer and an external smart card reader unit connected to the printer via a serial port. The smart card unit is also provided with a network interface, for connecting the unit to a network, and an appropriately programmed processor and memory to enable the combination of the general purpose printer and the smart card reader unit to operate as printing apparatus according to the present invention. In effect, the smart card reader unit is designed to interact with the recipient, who inserts his smart card, interact with the document store 130 to retrieve and decrypt the session key and the encrypted document, and forward the document to the printer to be printed.

Clearly, this embodiment does provide a weak link in the security of the overall system, by passing the unencrypted document over the communications link between the smart card reader unit and the printer. However, it is believed that the associated risks are minimised when the printer and smart card reader unit are co-located.

Such an arrangement may be preferable where a business wishes to utilise the invention in a cost effective way using existing printing equipment. It is also envisaged that the functionality in the printer and the smart card reader unit necessary to implement the invention may be partitioned in other ways, depending on the circumstances.

The billing system 150 is a process running on a computer which electronically bills users of the secure printing system. There are three main areas where users could be billed, which are for: submission of an encrypted document to the document store 130, storage by the document store 130 of a document for a specified time; and transmission and successful printing of the document. Other acts, such as using the directory server 120, could potentially also be billed. The sender or the recipient, or both, could be billed for any or each of these acts. For example, the sender could be billed for the submission, and the recipient could be billed for the storage and printing of the document. Of course, the sender and the recipient might be the same person, or different people from the same organisation, in which case a single person or organisation respectively would be billed for everything. Further, the owner of the document store and the owner of the printer might be different independent service providers. For example, in the case where the printer is in a public place, and is for use by the public, then the printer's owner would want financial reward for providing the service. Therefore, it would be necessary for a printer to identify itself in enough detail that the billing system 150 could allocate billed funds to the printer's owner.

For every act, it is necessary to identify the party to be billed and the party to be paid. Electronic identification and authentication for the purposes of electronic billing are well known in the field of electronic commerce, and will not therefore be discussed in any more detail herein.

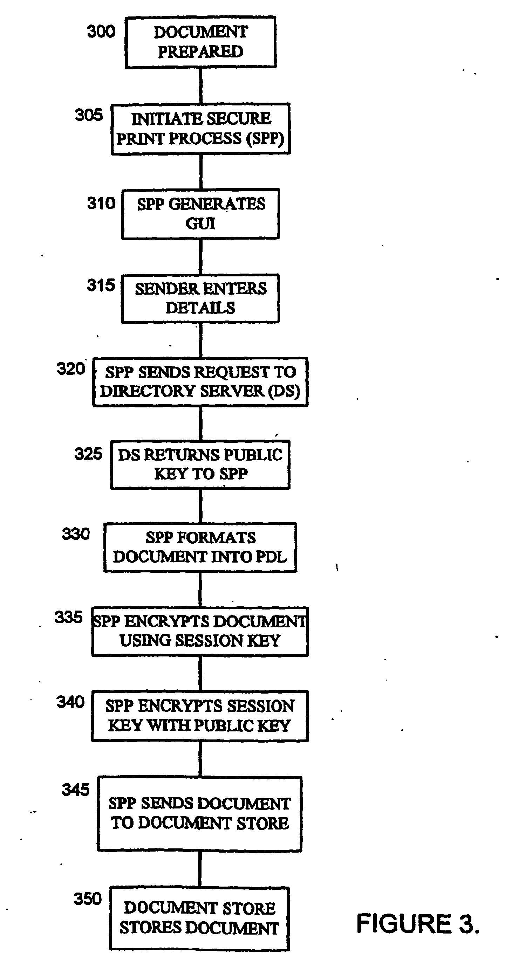

The operation of the local computer 100 in submitting a secure print job will now be described with reference to the flow diagram in Figure 3.

In step 300 of Figure 3, the local computer's operator (not shown), in other words the document's sender, has a document, for example a word-processed document, to be submitted for printing. The sender initiates the secure printing process for the secure printing of the document, in step 305. The secure printing process, in step 310, generates a graphical user interface, which requires the sender to enter the document details and the identity of the intended recipient. Of course, the intended recipient might be the sender himself. The sender enters the required details in step 315. Having received a valid input from the sender, the process, in step 320, continues by transmitting a request including the details input by the sender to the directory server 120. In response, the directory server 120 returns to the secure printing process the public key for the intended recipient, in step 325.

Next, in step 330, the secure printer process formats the document into a page description language, such as PostScript or PCL, which is interpretable by a printer. Obviously, the language will depend on the type of printer or other hardcopy apparatus to be used. The secure printer process then, in step 335, applies bulk encryption to the formatted document while retaining its integrity. This can be achieved using a message digest function such as the Secure Hash Algorithm (SHA-1) and a symmetric block or stream cipher, for instance, Data Encryption Standard (DES). The cipher uses a random number generated by the secure printer process to enact the encryption. The random number constitutes a session key. This step is a symmetric encryption step, which relies on a recipient having access to the session key to decrypt the document.

Alternative message digest algorithms, such as MD5, symmetric ciphers such as CAST or IDEA, and asymmetric algorithms such as the Elliptic Curve ElGamal encryption scheme can be used instead of the algorithms specified earlier.

In step 340, the secure printer process then applies an asymmetric encryption algorithm, such as RSA, to the session key, using the intended recipient's retrieved public key. Thus, after this step, only someone who has knowledge of the private key associated with the public key can decrypt the session key and hence then decrypt the document.

In some embodiments, where the whole procedure is enacted within the bounds of a relatively trusted or secure environment, it might be felt unnecessary to use the encryption stages. In such cases, for example where the messages are never transmitted outside of a single building, it might be sufficient to arrange that a document is only printed when a recipient is available at the printer.

In step 345, the secure printing process forwards across the network 110, to the document store 130, a message comprising the encrypted document, an 'envelope' for the document (which contains the encrypted session key), and the respective identity of the intended recipient.

Finally, in step 350, the document store 130 receives the message and stores it appropriately to hard disk 135.

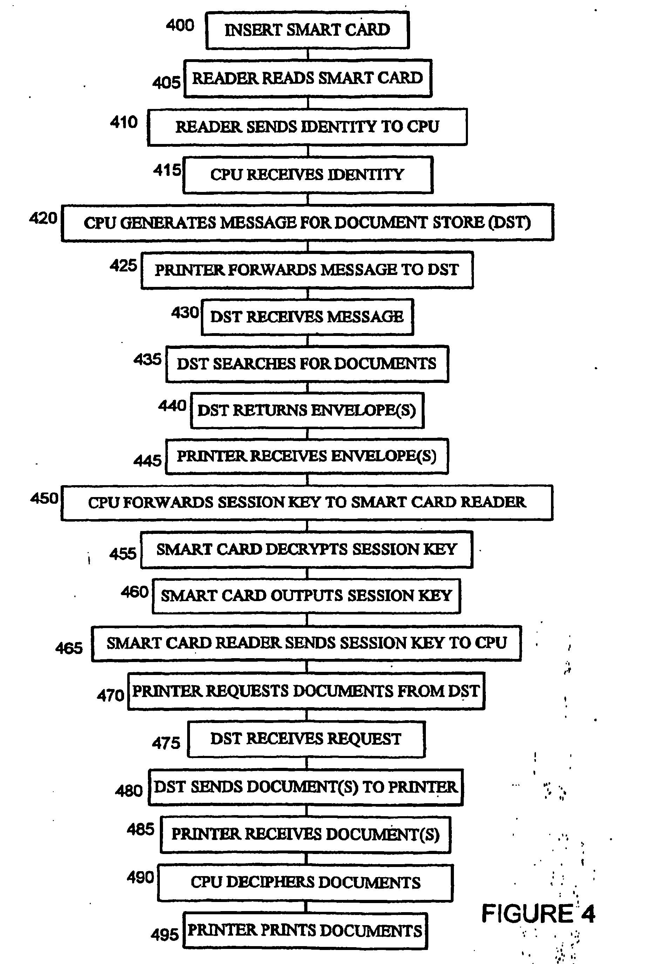

The process of securely printing a document retrieved from the document store 130 will now be described with reference to the flow diagram in Figure 4.

In step 400 of Figure 4, the intended recipient of the document, which has been stored by the document store 130 as described already, inserts his smart card into the smart card reader 280 of the secure printer 140. The smart card includes the recipient's identity and the recipient's private key. Although not illustrated in the flow diagram, it would be typical at this stage for the printer 140 to request entry by the recipient of a personal identification number, to verify that the recipient is the genuine owner of the smart card, and not someone who has found, or even stolen, it.

The smart card reader 280 reads the smart card, in step 405, and extracts the identity therefrom. Then, in step 410, the smart card reader 280 forwards the identity to the printer's CPU 200. The CPU 200 receives the identity in step 415 and generates a message including the identity, in step 420, which it forwards to the document store 130 in step 425.

In step 430, the document store 130 receives the message and, in step 435, searches the hard disk 135 for any documents having the same identity. In the present embodiment, the document store 130 will fmd one document. However, in general, there may be none, or any number of documents having a matching identity stored on the hard disk 135. At this stage, the document store 130 and printer 140 may be arranged to interact to provide status information to the recipient, displayed on a front panel display 270 of the printer, for example showing the number of documents awaiting printing, or that there are no documents waiting. Additionally, the recipient may even be given a choice of which (of several) documents he would like to retrieve.

Next, in step 440, the document store 130 returns to the printer 140 only the envelope for the document having the matching identity. In principle, the document could be sent at this stage as well, although whether or not this is done depends on the size of the document and the amount of available printer buffer memory. It is believed preferable at present to retrieve only the envelope, unless the printer 140 has a significant amount of RAM 240 into which the whole document could be received.

In step 445, the printer receives the envelope and, in step 450, forwards the encrypted session key to the smart card reader 280. The smart card reader 280 transfers the encrypted session key to the smart card, and the smart card, in turn, decrypts the session key, in step 455, using the private key stored therein. The smart card outputs the decrypted session key, in step 460, and the smart card reader 280 forwards the session key to the CPU 200, in step 465.

This technique for retrieving the session key is extremely advantageous, since the private key never needs to leave the smart card, and thus remains secret even from the printer.

The printer 140 forwards a message to the document store 130, in step 470, for the document store to transmit the encrypted document to the printer 140. In step 475, the document store 130 receives the message and, in step 480, transmits the document to the printer 140. In step 485, the printer 140 receives the document and, in step 490, deciphers it back into page description language using the session key.

Finally, in step 495, the printer prints the document for the intended recipient.

It is envisaged that, alternatively, the smart card itself might be programmed to enact the decryption of the document. This, of course, is design decision.

It will be appreciated that the network 110 could be a local area network, a wide area network or even global area network. For example, for the case of a global area network, the local computer 100 could be situated in an office in London and the printer could be located in an airport in Tokyo or New York. Similarly, the directory server 120 and the document store 130 could be located anywhere in the world.

In some embodiments, for responsiveness purposes, it may be desirable to have mirror document stores (not shown) - similar to Internet mirror sites - where the data in one store is copied by the store to other, geographically distant document stores. Thus, for example, there may be a London-based data server, and Tokyo and New York-based data servers. On receiving a document, the London data server would copy the document to both the Tokyo and New York data servers so that the recipient could retrieve and print the document from the data server nearest the printer being used. Obviously, the data mirroring could be tuned if it is known where the recipient is most likely to be when he wishes to print the document. For example, if the recipient were likely to be in New York, but might instead be in London, then a document submitted in London would only be mirrored to the New York-based data server. Such recipient location information could form part of the user profile information stored by the directory server 120. Thus, the location information under these circumstances would also be returned to the local computer 100 with the public key information, and this information would also be forwarded to the document store 130.

It is envisaged that the directory server 120 will hold other user profile information. For example, a recipient may only ever wish to receive documents from one specified printer. In this case, the information returned by the directory server 120 would reflect this and the document store 130 would then only release the encrypted document to the specified printer. Other information held by the directory server 120 for particular users might include printer information, which determines how the document is formatted by the local computer 100, for example whether to format the document into PostScript or PCL. In general, it is expected that the user can access the directory server 120, for example via the Internet, and modify his user profile whenever required.

It will also be appreciated that the components and processes described above need not reside on different computers. For example, the local computer 100 could support directory server and document store processes, as well as a secure printer process.

Furthermore, there is no reason why any or all of the processes described herein could not be located and called from any of a number of different computer systems connected to the distributed environment. Having said this, it is important, although not essential (as exemplified in the alternative embodiment described above), that documents that require secure printing do not pass across any publicly accessible or low security communications channels, without being in an encrypted state.

## Claims

1. A smart card reader apparatus (280) comprising:
smart card interface means for interacting with a smart card (145) containing at least an identifier;
first communicating means for communicating with a local printing apparatus (140); and
second communicating means for communicating with a remote document store (130) over a network (110), said document store (130) containing documents and, for each said document, an associated identifier, the apparatus (280) being arranged to:
interact with a supplied smart card (145) and obtain an identifier therefrom;
generate a request for a document using the identifier and communicate the request to the document store (130) in order to retrieve a document on the basis of the identifier; and
receive a communicated document and communicate the document to an associated printing apparatus (140), for printing the document.

2. Apparatus (280) according to claim 1, wherein documents in the document store are stored in encrypted form and have an associated stored encrypted key and the said smart card has means for decrypting the encrypted key, the apparatus (280) being further arranged to:
retrieve an encrypted document and its respective encrypted key on the basis of the identifier; and
interact with the smart card to decrypt the key and, using the decrypted key, decrypt the document.

3. Apparatus (280) according to claim 2, which is arranged to receive the encrypted key in a first communication from the document store (130) and receive the encrypted document in a subsequent communication from the document store (130).

4. Apparatus (280) according to any one of the preceding claims, further comprising input means for receiving a user-inputted identifier and means for transmitting the identifier to the smart card (145), whereby the smart card (145) can authenticate the user as a legitimate user thereof.

## Patentansprüche

1. Chipkarten-Lesegerät (280), das Folgendes umfasst:
Chipkarten-Schnittstellenmittel zum Interagieren mit einer Chipkarte (145), die mindestens ein Identifizierungskennzeichen enthält;
erste Kommunikationsmittel zum Kommunizieren mit einem lokalen Druckgerät (140); und
zweite Kommunikationsmittel zum Kommunizieren mit einem entfernten Dokumentenspeicher (130) über ein Netzwerk (110), wobei der Dokumentenspeicher (130) Dokumente enthält und für jedes der Dokumente ein zugehöriges Identifizierungskennzeichen, wobei das Gerät (280) vorgesehen ist zum:
Interagieren mit einer zugeführten Chipkarte (145) und Erlangen eines Identifizierungskennzeichens hiervon,
Erzeugen einer Anfrage für ein Dokument unter Verwendung des Identifizierungskennzeichens und Kommunizieren der Anfrage an den Dokumentenspeicher (130), um auf der Grundlage des Identifizierungskennzeichens ein Dokument abzurufen; und
Empfangen eines kommunizierten Dokuments und Kommunizieren des Dokuments an ein zugehöriges Druckgerät (140) zum Ausdrucken des Dokuments.

2. Gerät (280) nach Anspruch 1, wobei die Dokumente im Dokumentenspeicher in verschlüsselter Form gespeichert sind und einen zugehörigen gespeicherten verschlüsselten Schlüssel aufweisen und die Chipkarte Mittel zum Entschlüsseln des verschlüsselten Schlüssels aufweist, wobei das Gerät (280) ferner vorgesehen ist zum:
Abrufen eines verschlüsselten Dokuments und seines entsprechenden verschlüsselten Schlüssels auf der Grundlage des Identifizierungskennzeichens; und
Interagieren mit der Chipkarte, um den Schlüssel zu entschlüsseln, und Entschlüsseln des Dokuments mit Hilfe des entschlüsselten Schlüssels.

3. Gerät (280) nach Anspruch 2, das weiterhin dafür vorgesehen ist, den verschlüsselten Schlüssel in einer ersten Kommunikation vom Dokumentenspeicher (130) zu empfangen und das verschlüsselte Dokument in einer nachfolgenden Kommunikation vom Dokumentenspeicher (130) zu empfangen.

4. Gerät (280) nach einem der vorhergehenden Ansprüche, das weiterhin Eingabemittel zum Empfangen eines von einem Benutzer eingegebenen Identifizierungskennzeichens und Mittel zum Senden des Identifizierungskennzeichens an die Chipkarte (145) umfasst, wodurch die Chipkarte (145) den Benutzer als einen legitimen Benutzer hiervon authentifizieren kann.

## Revendications

1. Appareil lecteur de carte à puce (280) comprenant :
un moyen d'interface de carte à puce pour interagir avec une carte à puce (145) contenant au moins un identifiant ;
un premier moyen de communication pour communiquer avec un appareil d'impression local (140) ; et
un deuxième moyen de communication pour communiquer avec une mémoire de documents (130) distante sur un réseau (110), ladite mémoire de documents (130) contenant des documents et, pour chacun desdits documents, un identifiant associé, l'appareil (280) étant conçu pour :
interagir avec une carte à puce fournie (145) et obtenir un identifiant à partir de cette dernière ;
générer une demande de document en utilisant l'identifiant et communiquer la demande à la mémoire de documents (130) afin de récupérer un document sur la base de l'identifiant ; et
recevoir un document communiqué et communiquer le document à un appareil d'impression associé (140), pour imprimer le document.

2. Appareil (280) selon la revendication 1, dans lequel des documents dans la mémoire de documents sont stockés sous forme cryptée et présentent une clé cryptée stockée associée et ladite carte à puce présente un moyen pour décrypter la clé cryptée, l'appareil (280) étant en outre conçu pour :
récupérer un document crypté et sa clé cryptée respective sur la base de l'identifiant ; et
interagir avec la carte à puce pour décrypter la clé et, en utilisant la clé décryptée, décrypter le document.

3. Appareil (280) selon la revendication 2, qui est conçu pour recevoir la clé cryptée dans une première communication à partir de la mémoire de documents (130) et pour recevoir le document crypté dans une communication suivante à partir de la mémoire de documents (130).

4. Appareil (280) selon l'une quelconque des revendications précédentes, comprenant en outre un moyen d'entrée pour recevoir un identifiant entré par l'utilisateur et un moyen pour transmettre l'identifiant à la carte à puce (145), la carte à puce (145) pouvant authentifier l'utilisateur comme un utilisateur légitime de cette dernière.
